# EUROPEAN PATENT SPECIFICATION

(11) **EP 1 926 333 B1**
(45) Date of publication and mention of the grant of the patent: **08.01.2014**
(21) Application number: 05774366.8
(22) Date of filing: 18.08.2005
(51) Int. Cl.: H04W 76/02, H04W 4/10, H04W 4/08, H04W 8/12, H04W 76/00

(54) **A ROAMING IMPLEMENTED METHOD FOR DIGITAL TRUNK COMMUNICATION SYSTEM**
ROAMING-IMPLEMENTIERTES VERFAHREN FÜR EIN DIGITALES VERBINDUNGSLEITUNGS-KOMMUNIKATIONSSYSTEM
MÉTHODE D IMPLÉMENTATION DE NOMADISME POUR SYSTÈME DE COMMUNICATION NUMÉRIQUE TRUNK

(43) Date of publication of application: 28.05.2008
(73) Proprietor: ZTE Corporation, 518057 Shenzhen, Guangdong (CN)
(72) Inventor: GENG, Zhao Sen, 518057 Shenzhen, Guangdong (CN); WU, Qiang, 518057 Shenzhen, Guangdong (CN); XIE, Guo Sheng, 518057 Shenzhen, Guangdong (CN)
(74) Representative: Ilgart, Jean-Christophe
(86) International application number: PCT/CN2005/001293
(87) International publication number: WO 2007/019730

(56) References cited:
- CN-A- 1 050 964
- CN-A- 1 133 541
- CN-A- 1 625 293
- US-A1- 2003 153 339

## Description

### Technical Field

The present invention relates to digital trunking communication technology, particularly to a roaming implementation method for digital trunking communication system. Said system and method allow a trunk mobile terminal to realize a roaming function in the range of the network of a trunking system.

### Background Art

The trunking communication system is an important branch of mobile communication system. An indispensable function of a trunking system is the support of roaming which directly decides whether the system is capable of providing the service for the whole network. Since trunking service has particular characters, such as one-to-many call, late entry, and dynamic regrouping etc., and the roaming mechanism of the current mobile communication system is designed for the interconnecting service to ordinary telephones, it cannot be completely applied to a trunking system. Hence, it is particularly important to find a roaming method that accords with the development trend of the trunking system technology.

In the prior art, there are some patent documents such as: the Chinese Patent (which publication number is CN1138279) entitled "Communication Method and System of Honeycomb Concentration System Based on Program-Controlled Exchange", the US Patent (which publication number is CA1282462) entitled "Trunked Communication System with Nationwide Roaming Capability", the European Patent (which publication number is WO9105429) entitled "Trunking Network with Automatic Roaming without Centralized Control", and US 2003/0153339.

The Chinese Patent (which publication number is CN1138279) has the following defects:
Firstly, a control centre is used for controlling various services, such as telephone service, trunking service and so on. In the case that respective services are in high coupling degree, the control centre becomes a bottleneck of all kinds of the services;
Secondly, the method for controlling the roaming user is at the user level, and merely shows the control flow of an individual user rather than a call-level-based complete controlling method. However, due to a trunk call relating to a plurality of users, the controlling method at the call level comprises controlling method of calling /called user and cooperative working method of the respective systems.

The US Patent (which publication number is CA1282462) has the following defects:
Firstly, it is necessary that a terminal performs special processing relative to the roaming, i.e., the terminal needs to identify whether to roam or not so as to perform corresponding processing. This increases the complexity of the roaming mechanism;
Secondly, the implementation of whole network roaming needs the participation of one central control node, which renders that the support to the whole network roaming, is limited to the connection range of the central control node. Moreover, the central control node is a choke point of service processing. Paralysis of the central control node will leads to failure of the whole network roaming service.

The European Patent (which publication number is WO9105429) has the following defects:
Firstly, the implementation of the roaming needs cooperative control of the control centre and local computer (gateway) in respective systems and the procedure of the roaming service is relative complex;
Secondly, the method for controlling the roaming user is at the user level, and merely shows the control flow of an individual user rather than a call-level-based complete controlling method.
US 2003/153339 discloses a regional deployment of a trunking system wherein regionalized dispatch and location servers allow the user to roam between regions and perform user registration and inter-region call setup.

Therefore, there are some defects in the prior art that need to be improved and developed.

### Summary of the Invention

As to the above mentioned series of problems in the prior art, the object of the present invention is to provide a roaming implementation method for the digital trunking communication system, by which whole network roaming is supported, to ensure that all kinds of roaming users' services go along normally. More specifically, the present invention has the following objects:
1. Dividing the unitary control centre of the trunking system to respective subsystems according to their services, wherein a switching subsystem is used for supporting the whole network roaming of telephone services, a packet data subsystem is used for supporting the whole network roaming of packet data services, a dispatching subsystem is used for supporting the whole network roaming of trunking services, and so on, such division mechanism makes the design and implementation of various services, such as telephone service, packet data service, trunking service and etc., more definite and distinct, and allows the deployment and performance of the various services to be more flexible and independent, so that the complexity and service-coupling degree of the system are effectively reduced;
2. Simplifying the implementation of terminal roaming, so that the roaming is implemented without performing special processing relative to the roaming, i.e., the roaming is transparent for the terminal, which will greatly simplify the roaming mechanism;
3. Using a peer structure of the roaming network without participation and control of a central control node, wherein the roaming of other services, such as telephone services, packet data services, and etc., follows the principles relative to the existing mobile communication system and can inherit the function and advantages of the existing system; the roaming of trunking service is associated with the external IP network through a dispatching server (PTT Dispatching Server, abbreviated as "PDS" in the following) and a dispatch home register (PTT Home Register, abbreviated as "PHR" in the following) of an individual dispatching subsystem, thereby implementing transmission of trunk signaling and data streams by means of the powerful routing capability of the IP network, wherein the respective dispatching subsystems are peer to peer, so that the topology of the system is more flexible, the flow is more compact, the roaming coverage is broader, and the fault-tolerant capability of the system is stronger;
4. Simplifying the control strategy of the system to the roaming user, wherein for the trunking services, both roaming user and non-roaming user are controlled by PDS, so that the complexity of the service flow is reduced effectively;
5. For trunking services, providing a method at the call level, wherein what the roaming user visits serves as a point of control in call for trunk private call and roaming home trunking systems serve as a point of control in call for trunk group call. This method is capable of keeping consistency of process performed by the system on roaming and non-roaming calls and makes the calls always in a status where they can be monitored by dispatching console, so that the management capability of the system is increased.

The technical solution of the present invention is defined in independent claim 1.

The present invention provides a roaming implementation method for digital trunking communication system. Compared with the prior art, the visited dispatching subsystem of the originator serves as the main control dispatching subsystem of a private call, and the home dispatching subsystem of the originator serves as the main control dispatching subsystem of a group call, and the trunking service roaming mechanism is transparent for the terminal, thus the effect of consistency of call procedure for roaming users and non-roaming users in the system is achieved, the roaming mechanism of trunking service is simplified, the complexity of the system is reduced, and the dispatching management capability of the system is reinforced. The method of the present invention comprises roaming user registration, roaming user initiating a private call, roaming user initiating a group call, management method for floor, method for call release and method for voice forwarding, therefore, the effect of implementation of user roaming within the coverage of the trunking system network is achieved.

Furthermore, the method of the present invention divides the unitary control center of the trunking system into respective subsystems based on service, such division mechanism makes the respective services more definite and distinct, and allows the deployment and performance of the various services to be more flexible and independent, so that the effect of reducing the complexity and service-coupling degree of the system is achieved.

Furthermore, the method of the present invention simplifies the control strategy of the system for the roaming user, the control of the trunking services for both the roaming user and the non-roaming user is implemented by PDS without any other functional entities taking part in the control, so that the complexity of the service flow is reduced.

### Brief Description of the Drawings

Fig. 1 shows a network structure chart of a digital trunking communication system according to the present invention which supports the roaming;
Fig. 2 shows a composition structure chart of a dispatching subsystem of the trunking system according to the present invention;
Fig. 3 shows a system flow chart of a roaming user's registration according to the present invention;
Fig. 4 is a system flow chart which shows the roaming user initiating a private call according to the present invention;
Fig. 5 is a system flow chart which shows the roaming user initiating a group call according to the present invention;
Fig. 6-a is a flow chart which shows the user applying for floor in the main control dispatching subsystem according to an example;

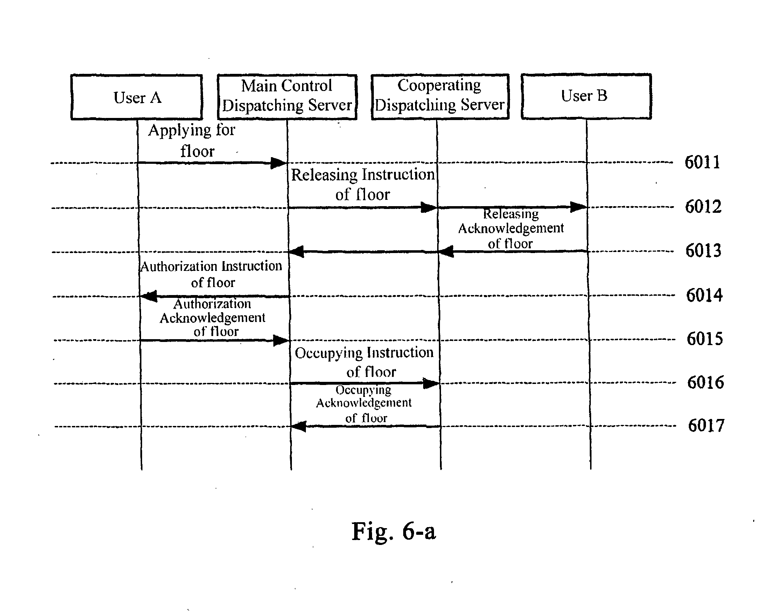

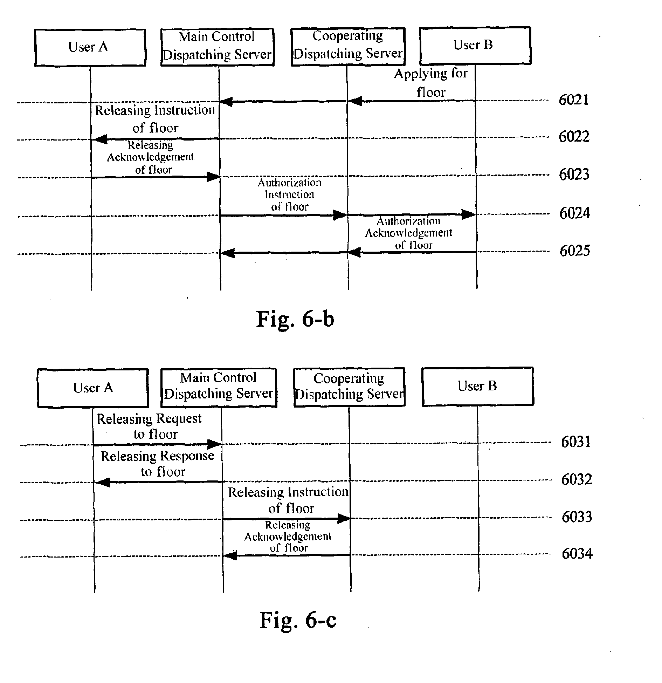

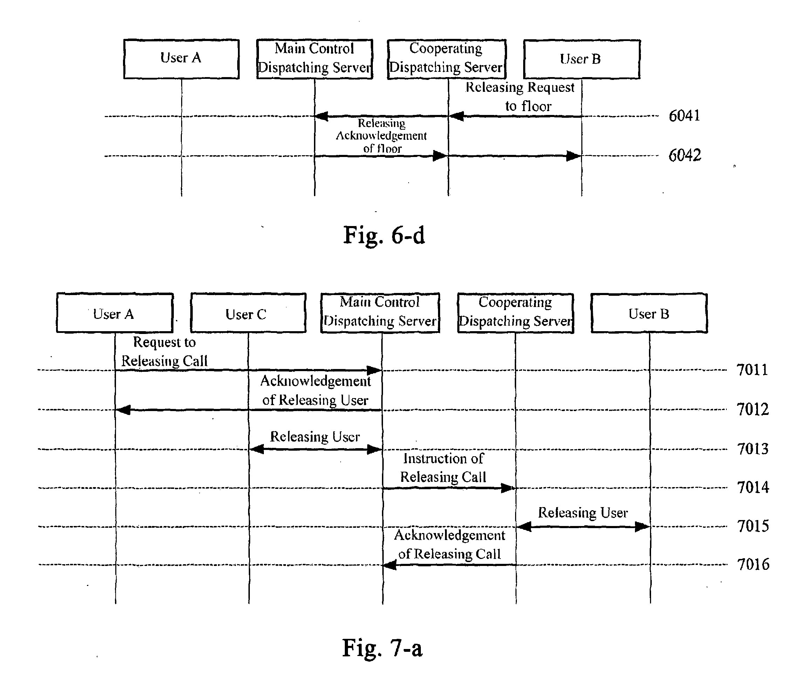

Fig. 6-b is a flow chart which shows the user applying for floor in the cooperating dispatching subsystem according to an example;
Fig. 6-c is a flow chart which shows the user releasing floor in the main control dispatching subsystem according to an example;
Fig. 6-d is a flow chart which shows the user releasing floor in the cooperating dispatching subsystem according to an example;

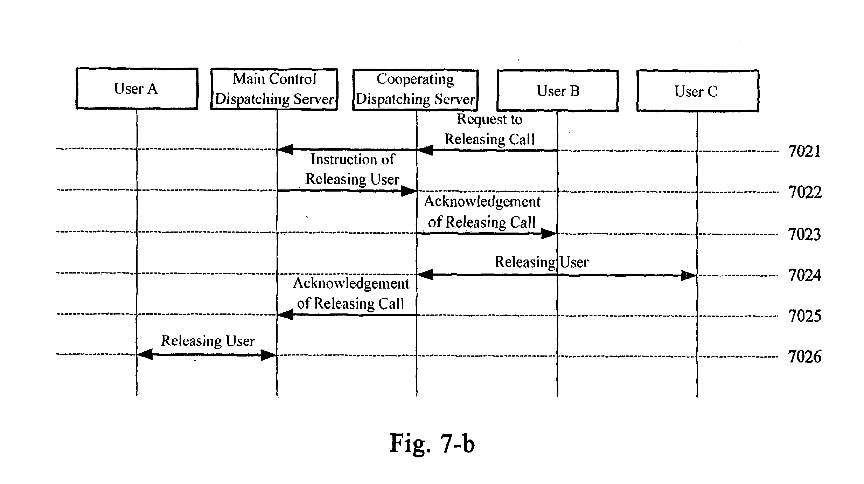

Fig. 7-a is a flow chart which shows the user releasing the call in the cooperating dispatching subsystem according to an example;
Fig. 7-b is a flow chart which shows the user releasing the call in the cooperating dispatching subsystem according to an example;

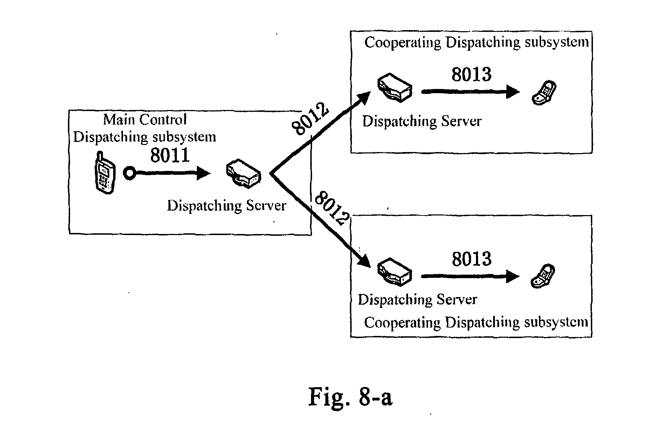

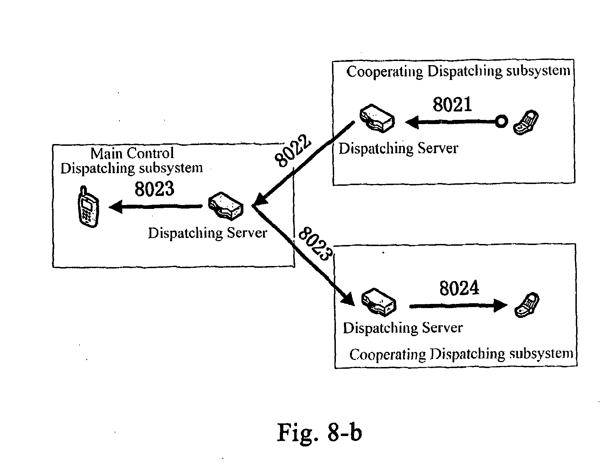

Fig. 8-a is a schematic view which shows voice is transmitted in the case where the user is speaking according to an example in the main control dispatching subsystem;
Fig. 8-b is a flow chart which shows voice is forwarded in the case where the user is speaking in the cooperating dispatching subsystem according to an example.

### Modes of Carrying Out the Invention

Now, the respective preferable embodiments of the present invention are described in detail in the combination with the drawings.

The digital trunking communication system of the present invention comprises the following basic subsystems: a base station subsystem, a switching subsystem, a dispatching subsystem, and a packet data subsystem. Wherein the base station subsystem performs the function of access to various services of a terminal; the switching subsystem performs the function of control and switching of telephone service of the terminal within its service coverage and serves as a control center of the telephone service; the dispatching subsystem performs the function of control and management of trunking service of terminal within its service coverage and serves as a control center of the trunking service; the packet data subsystem performs the function of control and access to packet data service of the terminal within its service coverage and serves as a control center of the packet data service. Furthermore, based on the above basic subsystem composition, components, such as a short message subsystem, an intelligent network subsystem, a positioning subsystem etc., may also be configured for providing abundance of services.

The network organization mode of the trunking system according to the present invention is a modularization mode, wherein the system is divided based on service into several relatively independent subsystems, each of the subsystems may develop in the light of its own state-of-the-art. Such a network organization mode makes the design and implementation of the various services, such as telephone service, packet data service, trunking service and etc., more definite and distinct and allows the deployment and performance of the various services to be more flexible and independent, so that the complexity of the system and service-coupling degree of the various services are effectively reduced.

The support of the trunking system according to the present invention for the roaming includes the support for the roaming of the various services of a user. The trunking system according to the present invention is the combination of the trunking communication and the modem mobile communication technologies, thus, besides the trunking service, the other kinds of services, such as telephone service, packet data service, short message service etc., as well as the roaming thereof supported by the system follow the relevant standard of the available mobile communication system, which is unnecessary to be described in detail here. The roaming method of the trunking system according to the present invention emphasizes particularly on describing the support to the roaming of user's trunking service, wherein the roaming of trunking service is implemented by the dispatching subsystem of the trunking system according to the present invention, a local trunking system connects to IP network via PDS and PHR of the dispatching subsystem, so as to interconnect trunking systems within other regions.

The roaming method of the trunking system according to the present invention includes the following processes: roaming user registration, a roaming user initiating a private call, the roaming user initiating a group call, floor managementfloor, call release and voice forwarding etc..

In the roaming implementation method of digital trunking communication system according to the present invention, a plurality of trunking systems need to be taken part in a roaming call, wherein there may be participation of intermediate trunking systems which mainly engage in transparent transmission of signaling or translation of signaling. For the convenience of description, the description concerning the intermediate trunking system is ignored in the following description of the method. In a roaming trunk call, the trunking system controlling the flow of the whole call is called a main control trunking system. The main control trunking system controls the connection of the flow of the whole call, maintains all information of the whole call, and manages the distribution of floor to the call. Generally, a visited trunking system of an originator serves as a main control trunking system of a private call, and a home trunking system of an originator serves as the main control trunking system of a group call. The other trunking systems taking part in the roaming trunk call, which are exclusive of the main control trunking system and the intermediate trunking systems, are known as cooperating trunking systems. The cooperating trunking systems act as the trunking systems of the destination.

For the convenience of description, in the present invention, instructions of the trunking system for paging a plurality of users, releasing a plurality of users and so on are processed in a serial manner, they may also be processed concurrently in practice, i.e. the trunking system may page a plurality of users at the same time or release a plurality of users simultaneously.

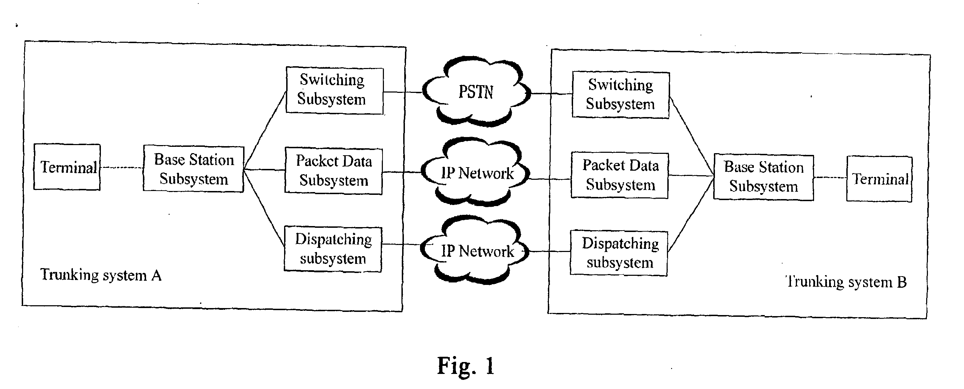

The network structure chart of the trunking system according to the present invention is shown in Fig. 1, and the respective components are explained as follows:
Terminal: terminal apparatus, which having trunking service function, simultaneously having a plurality of service capabilities, such as telephone service, packet data service, short message service etc., and being capable of the roaming within the coverage of the whole system network.

Base station subsystem: performing the function of access to the terminal, and assigning service based on service type used by the users to corresponding subsystem.

Switching subsystem: performing the function of control and switching of the telephone service of terminal within its service coverage and serving as a control center of the telephone service, wherein the switching subsystems interconnect each other via PSTN network.

Dispatching subsystem: performing the function of control and management of trunking service of terminal within its service coverage and serving as a control center of the trunking service. The dispatching subsystems interconnect each other via IP network.

Packet data subsystem: performing the function of control and access to packet data service of terminal within its service coverage and serving as a control center of the packet data service, wherein packet data subsystems interconnect each other via IP network.

Other subsystems: based on the above basic subsystem compositions, components, such as short message subsystem, intelligent network subsystem, positioning subsystem etc., may also be configured for providing abundance of services.

In said trunking system, each kind of service, such as telephone service, trunking service, packet data service, and so on, is executed, controlled, and processed by a corresponding subsystem, such as switching subsystem, dispatching subsystem, packet data subsystem, and so on; and the roaming support to each kind of service is provided by the interconnnected networks between the corresponding subsystems. The interconnected networks between these subsystems, together with the trunking systems of the respective regions, construct the trunking system network of whole network coverage to provide the users with roaming support of various services within the coverage of the whole network.

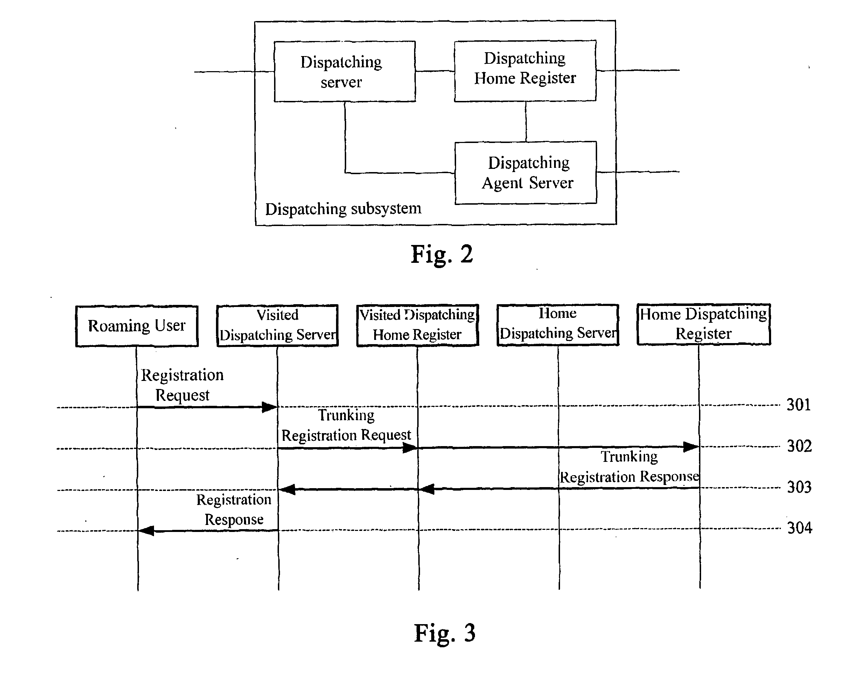

The composition structure chart of the dispatching subsystem corresponding to the present invention is shown in Fig. 2, and the respective functional nodes are described as following:
Dispatching server: implementing call control and floor managementfloor of trunking call;
Dispatching home register: saving registering information and position information of a trunking user and group, performing the function of authentication, authorization, and charging for the trunking user, and performing the function of position updating and group management;
Dispatching Agent server: maintaining sessions of respective dispatching consoles and management consoles, implementing management and maintenance of the dispatching consoles and management consoles for trunking dispatching.

Fig. 3 is the system flow chart shows roaming user registration, with the following steps:
(301) the roaming user initiating a request to registration of trunking service due to power-on or timing registration;
(302) after having received information of the registration request, visited PDS sending a trunking registration request to visited PHR; the visited PHR selecting route based on user identification code (such as IMSI) and forwarding the request to home PHR;
(303) the home PHR updating the user's position based on information of the trunking registration request, returning a trunking registration response to the visited PHR, and the visited PHR returning the response to the visited PDS;
(304) the visited PDS returning information of the trunking service registration response to the user;

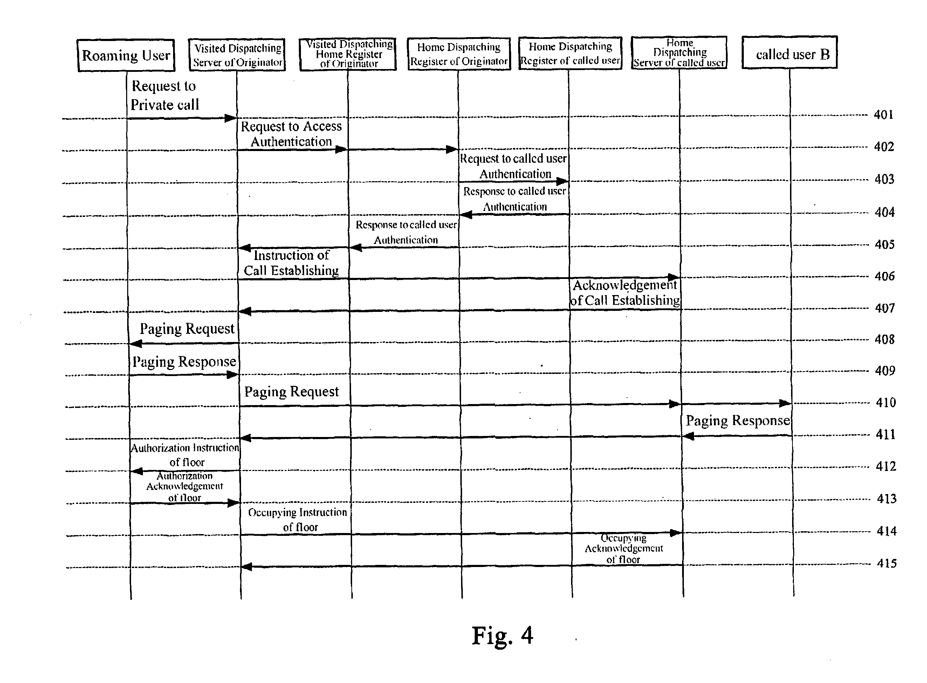

Fig. 4 is the system flow chart shows the roaming user initiates a private call, with the following steps:
(401) the roaming user originating call by pressing PTT (abbreviated as Push To Talk) button, a mobile station initiating a trunking call request;
(402) having received the request, visited PDS of an originator sending an authentication request to visited PHR of the originator; the visited PHR of the originator selecting route based on user's identification code and forwarding the authentication request to home PHR of the originator. If the calling user and the called user belong to the same home domain, then the Steps (403) and (404) would be unnecessary;
(403) the home PHR of the originator finding home of the called user based on the identification code of the called user, and sending to the home PHR of the called user a called user authentication request;
(404) the home PHR of the called user sending to the home PHR of the originator a called user authentication response;
(405) the home PHR of the originator performing authentication and authorization to the originator and the called user, returning an authentication response to the visited PHR of the originator, wherein the message contains the current location of the called user and authorization information for the originator, the visited PHR of the originator returning the authentication response to the visited PDS of the originator;
(406) after having received the authentication response, the visited PDS of the originator judging the user as a roaming user, and sending a call establishing instruction to home PDS of the called user based on information of user's home location and information of the called user's current location returned by the authentication response to notify basic information of this call, such as numbers of the originator, call connection identifications and so on. The current location of the called user may be the home location of the called user, or it may also be roaming place of the called user;
(407) having received the instruction of call establishing, the home PDS of the called user establishing data regions relative to this call and sending an acknowledgement message of the instruction of call establishing to the visited PDS of the originator;
(408) the visited PDS of the originator paging the originator via a wireless base station;
(409) the originator sending a paging response to the visited PDS of the originator;
(410) the visited PDS of the originator paging the called user via the home PDS of the called user;
(411) the called user sending a paging response to the visited PDS of the originator via the home PDS of the called user;
(412) the visited PDS of the originator authorizing floor to the originator via the wireless base station;
(413) the originator sending a message of authorization acknowledgement of floor to the visited PDS of the originator, thus the originator having acquired the floor and beginning to speak;
(414) the visited PDS of the originator sending a instruction which indicates floor has been occupied to the home PDS of the called user to notify that the floor has been authorized;
(415) the home PDS of the called user sending the instruction acknowledgement to the visited PDS;

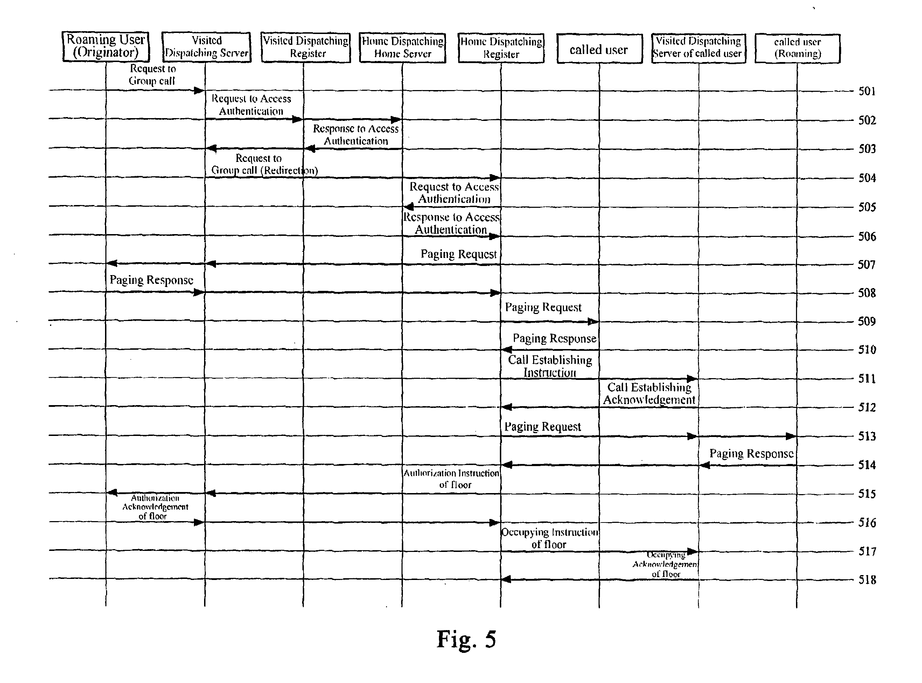

Fig. 5 is the system flow chart shows the roaming user initiates a group call, with the following steps:
(501) the roaming user originating call by pressing PTT button, a mobile station initiating a trunking call request;
(502) having received the request, visited PDS sending an authentication request to visited PHR; the visited PHR selecting route based on user's identification code and forwarding the authentication request to home PHR;
(503) the home PHR performing authentication and authorization of the user and returning an authentication response to the visited PHR, wherein the message contains IP address of the home PDS and authorization information of the originator, the visited PHR returning the authentication response to the visited PDS;
(504) having received the authentication response, the visited PDS judging the user as a roaming user and forwarding, based on information of home PDS returned by the authentication response, the group call request originated by the originator to the home PDS, wherein participation of PDS of intermediate trunking system may be necessary;
(505) a home dispatching subsystem being designated by the system as a control point for the group call, so as to control the connection of the whole group call, and the home PDS sending an access authentication request to the home PHR;
(506) a home trunking register sending a response message of access authentication to the home PDS and informing information of all group members of this call to home trunking server;
(507) the home PDS paging the originator via the visited PDS of the originator and a wireless base station;
(508) the originator sending a paging response to the home PDS via the visited wireless base station and the visited PDS;
(509) the home PDS paging the other group members of this call;
(510) a called user sending a paging response message to the home PDS;

Explanation: if there is non group member other than the originator roaming non-locally, the procedures of the following Steps 511, 512, 513, 514, 517, and 518 would be unnecessary.
(511) if there are some group members other than the originator roaming non-locally, then the home trunk server of the originator sending a instruction of call establishing to the visited trunking server of the roaming called user roaming non-locally to notify some basic information of this group call, such as group number, basic information of the originator, connection identification of the trunking call and so on;
(512) having received the instruction of the call establishing, visited PDS of the roaming called user establishing data region relative to this call and sending a acknowledgement message of the instruction of call establishing to the home PDS of the originator;
(513) the home PDS of the originator paging the called user via the visited PDS of the roaming called user and the wireless base station;
(514) the roaming called user sending a paging response to the home PDS of the originator via visited wireless base station and the visited PDS;
(515) the home PDS authorizing floor to the originator via the visited PDS of the originator and the wireless base station;
(516) the originator sending an authorization acknowledgement message of floor to the home PDS via visited wireless base station and visited PDS, thus the originator having acquired the floor and beginning to speak;
(517) the home PDS sending an instruction which indicates the floor is occupied to the visited PDS of the roaming called user to notify that the floor has been authorized;
(518) the visited PDS of the called user sending an acknowledgement of the instruction to the home PDS of the originator;

Fig. 6 shows system flow charts of floor management, wherein Fig. 6-a is a flow shows the user applies for floor in the main control dispatching subsystem, Fig. 6-b is a flow shows the user applies for floor in the cooperating dispatching subsystem, Fig. 6-c is a flow shows the user releases floor in the main control dispatching subsystem, Fig. 6-d is a flow chart shows the user releases floor in the cooperating dispatching subsystem. When the call type is a private call, a home dispatching subsystem of an originator serves as a main control dispatching subsystem; when the call type is a group call, a home dispatching subsystem of an originator serves as a main control dispatching subsystem. Here the procedures of the floor management of the private call and the group call are consistent.

For the convenience of description, the user located within the main control dispatching subsystem is defined as user A and the user located within a cooperating dispatching subsystem is defined as user B in the system flow of the floor management.

Fig. 6-a is a flow shows the user applies for floor in the main control dispatching subsystem, with the following steps:
(6011) user A applying floor from the main control PDS ;
(6012)
   a) in the case where the floor has not been authorized to another user, the Steps 6012 and 6013 are unnecessary.
   b) in the case where the floor has already been authorized to another user and the priority of the user A's floor is not higher than that of the speaking user, the user A being added into a queue for applications of floor and a procedure of floor queue being executed;
   c) in the case where the floor has already been authorized to user B and the priority of the user A's floor is higher than that of the user B, the main control PDS sending an instruction of releasing floor to the cooperating PDS to inform about releasing the floor to the user B, and the cooperating PDS informing the user B of releasing the floor.
(6013) the user B informing via the cooperating PDS the main control PDS that releasing of the floor is finished;
(6014) the main control PDS sending a authorization instruction of floor to the user A;
(6015) the user A sending an authorization acknowledgement of floor to the main control PDS;
(6016) the main control PDS informing the cooperating PDS that the floor has already been authorized to the user A;
(6017) the cooperating PDS sending a occupying acknowledgement message of floor to the main control PDS.

Fig. 6-b is a flow shows the user applies for floor in the cooperating dispatching subsystem, with the following steps:
(6021) user B applying floor from cooperating PDS, the cooperating PDS forwarding the request to applying for the floor to the main control PDS;
(6022)
   a) if the floor has not been authorized to another user, the Steps 6022 and 6023 are unnecessary;
   b) if the floor has already been authorized to another user and the priority of the user B's floor is not higher than that of the speaking user, the user B being added into a queue for applications of floor and a procedure of floor queue being executed;
   c) if the floor has already been authorized to the user A and the priority of the user B's floor is higher than that of the user A, the main control PDS informing the user A of releasing the floor;
(6023) the user A sending a releasing acknowledgement message of floor to the main control PDS;
(6024) the main control PDS sending an authorization instruction of floor to the user B via the cooperating PDS;
(6025) the user B sending an authorization acknowledgement of floor to the main control PDS via the cooperating PDS;

Fig. 6-c is a flow shows the user releases floor in the main control dispatching subsystem, with the following steps:
(6031) user A sending to the main control PDS a request to releasing floor;
(6032) the main control PDS sending a acknowledgement message of releasing floor to the user A;
(6033) the main control PDS sending a released instruction of floor to a cooperating PDS;
(6034) the cooperating PDS sending an acknowledgement message of released instruction of floor to the main control PDS;

Fig. 6-d is a flow chart shows the user releases floor in the cooperating dispatching subsystem, with the following steps:
(6041) user B sending a request to releasing floor to the main control PDS via cooperating PDS;
(6042) the main control PDS sending a releasing acknowledgement message of floor to the user B via the cooperating PDS.

Fig. 7 shows system flow charts of releasing call, wherein Fig. 7-a is a flow shows the user releases the call in the cooperating dispatching subsystem, and Fig. 7-b is a flow shows the user releases the call in the cooperating dispatching subsystem. When the call type is a private call, a home dispatching subsystem of an originator serves as a main control dispatching subsystem; when the call type is a group call, a home dispatching subsystem of an originator serves as a main control dispatching subsystem. Here the procedures of the floor management of the private call and the group call are consistent.

Fig. 7-a is a flow shows the user releases the call in the cooperating dispatching subsystem, with the following steps:
(7011) the user applying for releasing this call from the main control PDS;
(7012) the main control PDS sending an acknowledgement message of releasing user to the originator;
(7013) the main control PDS releasing all users taking part in this call within its own coverage;
(7014) the main control PDS sending an instruction of releasing call to cooperating PDS;
(7015) the cooperating PDS releasing all users taking part in this call within its own coverage;
(7016) the cooperating PDS sending an acknowledgement message of releasing call to the main control PDS;

Fig. 7-b is a flow shows the user releases the call in the cooperating dispatching subsystem, with the following steps:
(7021) the user applying for releasing this call from the main control PDS;
(7022) the main control PDS sending an instruction of releasing call to cooperating PDS;
(7023) the cooperating PDS sending a acknowledgement message of the releasing user to the originator;
(7024) the cooperating PDS releasing all users taking part in this call within its own coverage;
(7025) the cooperating PDS sending an acknowledgement message of releasing call to the main control PDS;
(7026) the main control PDS releasing all users taking part in this call within its own coverage.

Fig. 8 shows flow charts of voice forwarding of a trunking call, wherein Fig. 8-a is a schematic view shows voice is transmitted in the case where the user is speaking in the main control dispatching subsystem; and Fig. 8-b is a flow chart shows voice is forwarded in the case where the user is speaking in the cooperating dispatching subsystem. When the call type is a private call, a home dispatching subsystem of an originator serves as a main control dispatching subsystem; when the call type is a group call, a home dispatching subsystem of an originator serves as a main control dispatching subsystem. Here the procedures of the floor management of the private call and the group call are consistent.

Fig. 8-a is a schematic view shows voice is transmitted in the case where the user is speaking in the main control dispatching subsystem, the corresponding steps are as following:
(8011) the user in the main control PDS acquiring the floor and speaking, the main control PDS forwarding firstly a voice packet to other users within its own service coverage;
(8012) the main control PDS sending the voice packet to other cooperating PDS;
(8013) the cooperating PDS sending the voice packet to users within its own service coverage.

Fig. 8-b is a flow chart shows voice is forwarded in the case where the user is speaking in the cooperating dispatching subsystem, with the following corresponding steps:
(8021) the user in the cooperating PDS acquiring the floor and speaking, the cooperating PDS forwarding at first a voice packet to other users within its own service coverage;
(8022) the cooperating PDS forwarding the voice packet to the main control PDS;
(8023) the main control PDS forwarding the voice packet to users within its own service coverage, and simultaneously forwarding the voice packet to the other cooperating PDS;
(8024) the cooperating PDS forwarding the voice packet to users within their own service coverage.

Owing to the above mentioned, the present invention provides a roaming implementation method for a digital trunking communication system, so as to provide the user with roaming support for various services within the whole network coverage. This method not only makes full use of the relevant standards of the available mobile communication system, but also implements the interconnection between the trunking systems in all quarters by the control mechanism of the dispatching subsystem, so that the object of trunking service roaming of terminal is achieved.

However, it shall be understood that the above description of the embodiments are relative concrete, and shall not be construed as limiting the protection scope of the present invention. And the protection scope of the present invention shall be covered by attaching claims of the present invention.

## Claims

1. A roaming implementation method for a digital trunking communication system, wherein the trunking communication system comprises: a base station subsystem, a switching subsystem, a dispatching subsystem, and a packet data subsystem, said method comprises:
implementation of said roaming being controlled by the dispatching subsystem, the digital trunking communication system connecting to an IP network through a dispatching server and a dispatching home register of its dispatching subsystem, so as to interconnect with a trunking system within another region;
said roaming method for trunking system further comprising roaming user registration, roaming user initiating a trunk private call, roaming user initiating a trunk group call, floor management, call release and voice forwarding;
wherein the process of said roaming user registration comprises the following steps:
a1) users of the trunking system adopting a unique identification code which is laid out consistently in whole network and serves as the basis for user messages to route;
b1) when the roaming user is a trunking user, the roaming user initiating (301) position registration of trunking service, a dispatching subsystem of a visited trunking system routing (302) based on information of user's identification code and sending it via the network to a dispatching subsystem of a home trunking system which recording newest registered position information of the trunking user;
wherein the visited dispatching subsystem of a call originator serves as the main control dispatching subsystem of the trunk private call; the method being **characterized in that** the home dispatching subsystem of the call originator serves as the main control dispatching subsystem of the trunk group call.

## Patentansprüche

1. Roaming-Implementierungsverfahren für ein digitales Bündelungskommunikationssystem, wobei das Bündelungskommunikationssystem umfasst: ein Basisstation-Untersystem, ein Umschalt-Untersystem, ein Abfertigungsuntersystem und ein Paketdaten-Untersystem, wobei das Verfahren umfasst:
zur Implementierung des Roaming, welches durch das Abfertigungsuntersystem gesteuert wird, verbindet sich das digitale Bündelungskommunikationssystem mit einem IP-Netzwerk über einen Abfertigungsserver und ein Abfertigungsheimatregister von seinem Abfertigungsuntersystem derart, dass es mit einem Bündelungssystem innerhalb einer anderen Region verbunden ist;
wobei das Roaming-Verfahren für ein Bündelungssystem ferner Roamingnutzer-Registrierung, Veranlassen eines gebündelten privaten Anrufs von einem Roamingnutzer, Veranlassen eines gebündelten Gruppenanrufs von einem Roamingnutzer, Etagenverwaltung, Anruffreigabe und Sprachweiterleitung umfasst;
wobei der Prozess der Roamingnutzer-Registrierung die folgenden Schritte umfasst:
a1) Übernehmen eines eindeutigen Identifikationscodes, der im gesamten Netzwerk konsistent angelegt ist und als die Basis für Nutzernachrichten dient, um geroutet zu werden, von Nutzern des Bündelungssystems;
b1) falls der Roamingnutzer ein Bündelungsnutzer ist, Veranlassen (301) einer Positionsregistrierung eines Bündelungsdienstes von dem Roamingnutzer, Routen (302) basierend auf Information von dem Identifikationscode des Nutzers von einem Abfertigungsuntersystem eines besuchten Bündelungssystems und Senden über das Netzwerk an ein Abfertigungsuntersystem eines Heimatbündelungssystems, welches neueste registrierte Positionsinformation des Bündelungsnutzers aufzeichnet;
wobei das besuchte Abfertigungsuntersystem vom Anruferzeuger als das Hauptsteuerungsabfertigungsuntersystem des gebündelten privaten Anrufs dient, wobei das Verfahren **dadurch gekennzeichnet ist, dass** das Heimatabfertigungsuntersystem des Anruferzeugers als das Hauptsteuerungsabfertigungsuntersystem des gebündelten Gruppenanrufs dient.

## Revendications

1. Procédé d'implémentation d'itinérance pour un système de communication à partage numérique, dans lequel le système de communication à partage comprend :
un sous-système de station de base, un sous-système de commutation, un sous-système de répartition, et un sous-système de commutation par paquets, ledit procédé comprend :
la mise en oeuvre de ladite itinérance commandée par le sous-système de répartition, le système de communication à partage numérique se connectant à un réseau IP par l'intermédiaire d'un serveur de répartition et d'un enregistreur de localisation nominal de son sous-système de répartition, afin de réaliser une interconnexion avec un système de partage à l'intérieur d'une autre région ;
ledit procédé d'itinérance pour système à partage comprenant en outre un enregistrement d'utilisateur itinérant, un utilisateur itinérant émettant un appel privé de ligne réseau, un utilisateur itinérant émettant un appel de groupe de ligne réseau, une gestion de droit de parole, une libération de communication et un renvoi vocal ;
dans lequel le procédé dudit enregistrement d'utilisateur itinérant comprend les étapes suivantes :
a1) l'adoption, par des utilisateurs du système à partage, d'un code d'identification unique qui est agencé de façon constante dans le réseau entier et sert de base pour des messages utilisateur à acheminer ;
b1) lorsque l'utilisateur itinérant est un utilisateur à partage, l'émission (301), par l'utilisateur itinérant, d'un enregistrement de position de service à partage, l'acheminement (302), par un sous-système de répartition d'un système à partage visité, en fonction d'informations de code d'identification de l'utilisateur et son envoi, par l'intermédiaire du réseau, à un sous-système de répartition d'un système à partage local qui enregistre des informations de position enregistrées les plus récentes de l'utilisateur à partage ;
dans lequel le sous-système de répartition visité d'un émetteur d'appel sert de sous-système de répartition de commande principal de l'appel privé de ligne réseau ; le procédé étant **caractérisé en ce que** le sous-système de répartition local de l'émetteur d'appel sert de sous-système de répartition de commande principal de l'appel de groupe de ligne réseau.
